(19) Europäisches Patentamt

European Patent Office

Office européen des brevets

(11) **EP 0 902 277 A1**

(12) **EUROPÄISCHE PATENTANMELDUNG**

(43) Veröffentlichungstag:
17.03.1999 Patentblatt 1999/11

(51) Int. Cl.$^6$: **G01N 22/04**, G01N 22/00

(21) Anmeldenummer: 98114417.3

(22) Anmeldetag: 31.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.08.1997 DE 19734978

(71) Anmelder:
Hauni Maschinenbau Aktiengesellschaft
21033 Hamburg (DE)

(72) Erfinder:
• Möller, Henning Dr.
22605 Hamburg (DE)
• Tobias, Jörg
21423 Drage/Elbe (DE)
• Noack, Andreas
21423 Drage/Elbe (DE)

(54) **Verfahren und Anordnung zum Erfassen mindestens einer Eigenschaft eines Stoffes**

(57) Beschrieben werden ein Verfahren und eine Anordnung zum Erfassen mindestens einer Eigenschaft eines Stoffes durch Auswertung der durch die Anwesenheit des Stoffes verursachten Verstimmung eines HF-Resonators, dem Mikrowellen zugeführt werden, und von dem ein hochfrequentes, von dem Stoff beeinflußtes Signal abgenommen wird, dessen Hochfrequenzverschiebung und dessen Dämpfung gegenüber einem von dem Stoff beeinflußten Signal erfaßt wird, wobei dem Resonator Mikrowellen mit mindestens zwei unterschiedlichen Frequenzen zugeführt werden. Hierbei werden dem Resonator Mikrowellen von zwei Frequenzen zugeführt, die beide einer abfallenden Flanke der Resonanzkurve zugeordnet sind.

Fig.1

**Beschreibung**

Die Erfindung betrifft ein Verfahren zum Erfassen mindestens einer Eigenschaft eines Stoffes durch Auswertung der durch die Anwesenheit des Stoffes verursachten Verstimmung eines HF-Resonators, dem Mikrowellen zugeführt werden, und von dem ein hochfrequentes, von dem Stoff beeinflußtes Signal abgenommen wird, dessen Resonanzfrequenz-Verschiebung und Dämpfung gegenüber einem von dem Stoff unbeeinflußten Signal erfaßt wird, wobei dem Resonator Mikrowellen mit mindestens zwei unterschiedlichen Frequenzen zugeführt werden, die Resonanzfrequenz-Verschiebungen durch Vergleich der von dem Stoff unbeeinflußten und beeinflußten Resonanzkurven des Resonators enfaßt werden und die Dämpfung durch Vergleich der Amplituden der Resonanzkurven bei den Frequenzen der zugeführten Mikrowellen erfaßt wird.

Die Erfindung betrifft außerdem eine Anordnung zum Erfassen mindestens einer Eigenschaft eines Stoffes, mit einem Resonator, dem von einem Generator Mikrowellen zuführbar sind, und von dem ein hochfrequentes von dem Stoff beeinflußtes Signal zum Erfassen seiner Resonanzfrequenz-Verschiebung und Dämpfung gegenüber dem von dem Stoff unbeeinflußten Signal abnehmbar und einer Auswertschaltung zuführbar ist, mit einer Zufuhr von Mikrowellen mit mindestens zwei unterschiedlichen Frequenzen von dem Generator zu dem Resonator und mit einer Resonanzfrequenz-Verschiebungen durch Vergleich der von dem Stoff beeinflußten Resonanzkurve gegenüber der von dem Stoff unbeeinflußten Resonanzkurve sowie die Dämpfung durch Vergleich der Apliduden der von dem Stoff beeinflußten und unbeeinflußten Resonanzkurven erfassenden Schaltungsanordnung.

Die der Erfindung zugrundeliegende Aufgabe besteht in einer Weiterbildung des eingangs beschriebenen Verfahrens und der obenangegebenen Anordnung.

Nach dem Verfahren gemäß der Erfindung besteht die Lösung darin, daß dem Resonator Mikrowellen von zwei Frequenzen zugeführt werden, die beide einer abfallenden Flanke der Resonanzkurve zugeordnet sind.

Weitere Ausgestaltungen des Verfahrens gemäß der Erfindung sind den untergeordneten Verfahrensansprüchen zu entnehmen.

Die eingangs genannte Anordnung ist gekennzeichnet durch die Zufuhr von Mikrowellen von zwei Frequenzen, die beide einer abfallenden Flanke der Resonanzkurve zugeordnet sind, zu dem Resonator.

Weitere Ausgestaltungen der Anordnung gemäß der Erfindung sind den untergeordneten Anordnungsansprüchen zu entnehmen.

Der mit der Erfindung verbundene Vorteil besteht darin, daß die beiden Werte der rechteckförmigen Modulationsschwingung leichter stabil zu halten sind als etwa eine sinusförmige Modulationsschwingung. Außerdem ergeben sich Vorteile bei der Bildung der durch die Modulation erzeugten Auswertsignale.

In der Zeichnung wird die Erfindung anhand eines Ausführungsbeispiels näher erläutert.

Es zeigen:

Figur 1  eine Schaltungsanordnung zum Erfassen von Größen eines Stoffes mit einer Resonatoranordnung, der ein durch eine rechteckförmige Schwingung frequenzmoduliertes Mikrowellensignal zugeführt ist,

Figur 2  den Verlauf der Resonatorkurven und der Auswertsignale bei leerer und gefüllter Resonatoranordnung entsprechend der Schaltungsanordnung nach Figur 1,

Figur 3  eine Schaltungsanordnung zum Erfassen der Trockenmasse und/oder der Feuchtmasse von Inkrementen eines mit einem Zigarettenpapierstreifen umhüllten Tabakmengenstromes (Zigarettenstrang),

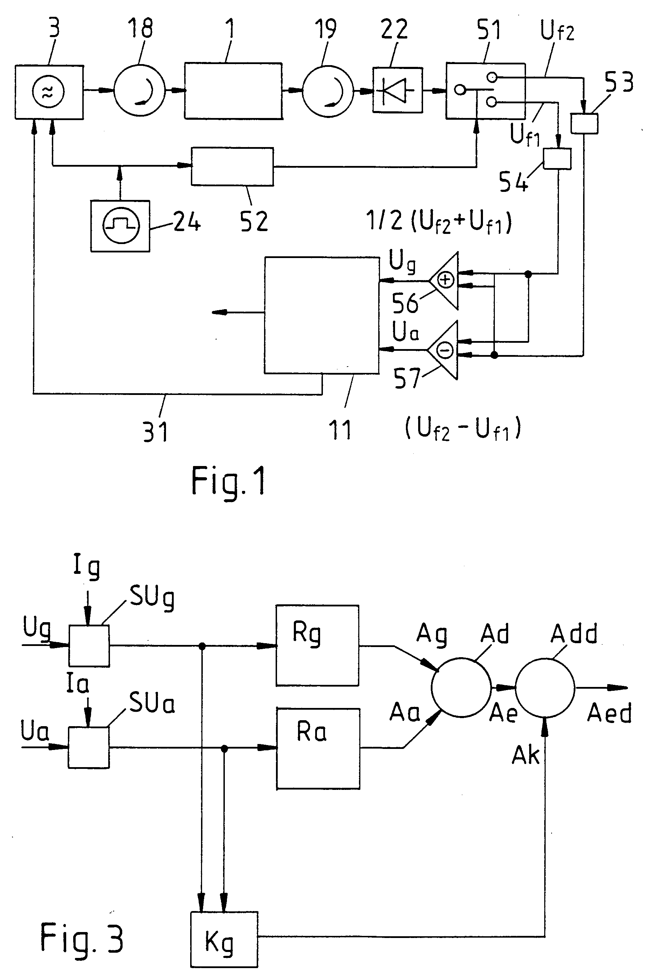

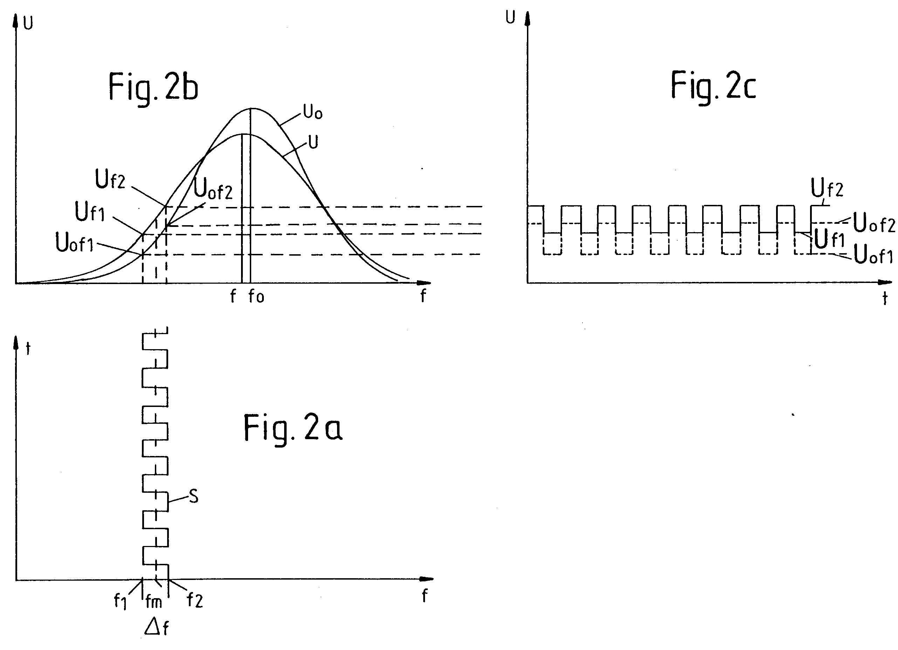

In den Figuren 1 und 2 wird die Frequenz eines im GHz-Bereich (z. B. bei ca. 6 Ghz) liegenden Mikrowellen-Ausgangssignals eines Mikrowellengenerators 3 von einer Frequenz-Steueranordnung 24 periodisch zwischen zwei Werten umgeschaltet. Hierzu kann eine rechteckförmige Wechselspannung von z. B. 100 Khz benutzt werden. Dies zeigt Figur 2a, in der die zeitlichen Änderungen der Frequenzen f dargestellt sind. Die mittlere Frequenz fm wird entsprechend der rechteckförmigen Kurve s im Frequenzbereich Δf periodisch zwischen zwei Werten f2 und f1 geändert. Das Ausgangssignal von Mikrowellengenerator 3 wird über einen Zirkulator 18 zur Verhinderung einer Rückkopplung einer Hochfrequenz-Resonatoranordnung 1 (HF-Resonator) zugeführt, die von einem umhüllten Tabakstrang, also einem Zigarettenstrang, durchsetzt ist. Die Dichte/Masse oder Feuchte des durch den Resonator hindurchbewegten Tabaks soll mit der im folgenden beschriebenen Schaltungsanordnung erfaßt werden. Prinzipiell kann auch ein Strang mit einer anderen Füllung, z. B. ein sogenannter Filterstrang, vermessen werden. Einzelheiten eines für den vorgenannten Zweck sehr vorteilhaften HF-Resonators 1 sind der DE-Anmeldung 197 05 260 vom 12.02.97/der US-Anmeldung 08-799129 vom 13.02.97/EP-Anmeldung 97102166 vom 12.02.97 zu entnehmen.

Die mittlere Frequenz fm liegt, wie Figur 2b zeigt, vorzugsweise im Wendepunkt der Resonanzkurve u0, die ohne Tabak in dem Resonator 1 für unterschiedliche Frequenzen der zugeführten Mikrowellen ermittelt wurde. Den Verlauf der Resonanzkurve bei das Meßgut enthaltendem Resonator 1 zeigt u in Figur 2b. f0 und f sind die Resonanzfrequenzen bei leerem bzw. gefülltem Resonator 1. Dem unteren Frequenzwert f1 entspricht auf der Resonanzkurve u0 des leeren Resonators 1 der Wert Uof1, auf der Resonanzkurve u des Meßgut enthaltenden Resonators der Wert Uf1; dem oberen Frequenzwert f2 entspricht der Wert UOf2 (Resonanzkurve uO des leeren Resonators 1) bzw. Uf2 (Resonanzkurve u des mit Meßgut gefüllten Resonators 1). Die Ausgangssignale des Resonators 1, also die Resonanzsignale bei dem niedrigeren (f1) und dem höheren (f2) Modulationswert, werden über einen weiteren Zirkulator 19 zur Unterdrückung einer unerwünschten Rückkopplung einer Mikrowellendiode 22 (z. B. vom Typ HP 8472 B der Firma Hewlett-Packard) zugeführt, die das Mikrowellensignal in ein Gleichspannungssignal umsetzt. Dieses Signal wird einer Abtastanordnung 51 zugeführt, die von einer Synchronisieranordnung 52 in Abhängigkeit von der rechteckförmigen Wechselspannung der Frequenz-Steueranordnung 24 gesteuert wird. Die Steuerung erfolgt derart, daß die Spannungswerte des Resonators 1 gerade dann abgefragt werden, wenn der Mikrowellengenerator 3 Mikrowellen mit den höheren oder niedrigeren Frequenzwerten f2 bzw. f1 der Modulationsschwingung s dem Resonator 1 zuführt. Auf diese Weise können die Werte Uf2 und Uf1 gewonnen werden, die in Kurzzeitspeicher 53 bzw. 54 überführt werden. Deren Ausgangssignale werden einem Summierglied 56, das den Wert ½ (Uf2+Uf1) = Ug bildet, sowie einem Subtraktionsglied 57 zugeführt, das die Differenz Uf2-Uf1 = Ua beider Ausgangssignale bildet. Diese Signale werden einer in Figur 3 beschriebenen Auswertanordnung 11 zugeführt, in der die Dichte/Massewerte oder die Feuchtewerte, insbesondere des Tabaks in dem Zigarettenstrang, ermittelt werden.

Durch eine besondere Schaltungsanordnung kann dafür gesorgt werden, daß der Mikrowellengenerator 3 über Leitung 31 ein Korrektursignal erhält, sobald die mittlere Frequenz fm aus dem Wendepunkt der Resonanzkurve u0 auswandert. Durch das Korrektursignal wird die Frequenz fm des Ausgangssignals des Generators wieder auf den Wert gebracht, der dem Wendepunkt der Resonanzkurve entspricht.

Figur 3 zeigt schematisch die Verarbeitung der Signale Ua, Ug aus den Figuren 1 und 2 in der Auswertanordnung 11 zur Ermittlung der Masse/Dichtewerte. Die Signale werden zunächst in digitalisierter Form in Speichern SUg, SUa abgespeichert. Diese Signale werden von einer Abtastanordnung in einer Folge abgefragt, die bestimmten Inkrementen des den Resonator 1 durchsetzenden Zigarettenstranges, z. B. 1 mm, entsprechen. Dies bedeutet, daß bei einer Produktionsgeschwindigkeit des Zigarettenstranges von 10000 jeweils 60 mm langen Zigaretten/Min. die Abtastrate bei 100 Mikrosekunden liegt, also alle 100 Mikrosekunden die Werte (Signale) in den Speichern SUg und SUa abgetastet werden. Mit noch kürzeren Übertragungsimpulsen Ig und Ia werden die Werte in Rechenstufen Rg und Ra übertragen, in denen sie mit Konstanten zu Ausgangswerten Ag und Aa verrechnet werden. Die Verrechnung kann in einem einfachen Fall durch Polynome vom Typ

$a + b \, Ug = Ag$ bzw. $c + d \, Ua = Aa$ erfolgen. Die Konstanten a, b, c und d werden durch Parametrierung ermittelt, bei der Zigaretten mit durch Wiegen genau ermittelten Massen/Dichten bezüglich der zugordneten Ug- und Ua-Werte vermessen werden. Aus den Beziehungen zwischen unterschiedlichen Dichten/Massen und den zugehörigen Werten von Ug und Ua lassen sich die Konstanten ermitteln.

Prinzipiell können auch Polynome höherer Ordnung oder auch andere Funktionen Verwendung finden.

Die Ausgangssignale Ag und Aa werden einem Additionsglied Ad zugeführt, dessen Ausgangssignal Ae der Dichte/Masse entspricht. Weicht das von Ad abgegebene Signal Ae von dem genauen Wert der Masse/Dichte ab, so kann ein Korrekturglied Kg ein empirisch ermitteltes Korrektursignal Ak an ein weiteres Additionsglied Add abgeben, dessen Ausgangssignal Aed dem Dichte/Massewert des Tabakstranges noch genauer entspricht.

Eine Auswertung der Meßsignale nach der Tabakfeuchte des Tabakstranges kann prinzipiell auf die gleiche Weise erfolgen. Anstatt mit bestimmten bekannten Gewichten (Dichte/Masse) werden dann Zigaretten mit bestimmten bekannten Feuchtmassen, also mit unterschiedlichen Werten der relativen Feuchte, zur Parametrierung verwendet.

**Patentansprüche**

1. Verfahren zum Erfassen mindestens einer Eigenschaft eines Stoffes durch Auswertung der durch die Anwesenheit des Stoffes verursachten Verstimmung eines HF-Resonators, dem Mikrowellen zugeführt werden, und von dem ein hochfrequentes, von dem Stoff beeinflußtes Signal abgenommen wird, dessen Resonanzfrequenz-Verschiebung und Dämpfung gegenüber einem von dem Stoff unbeeinflußten Signal erfaßt wird, wobei dem Resonator Mikrowellen mit mindestens zwei unterschiedlichen Frequenzen zugeführt werden, die Resonanzfrequenz-Verschiebungen durch Vergleich der von dem Stoff unbeeinflußten und beeinflußten Resonanzkurven des Resonators erfaßt werden, und die Dämpfung durch Vergleich der Amplituden der Resonanzkurven bei den Frequenzen der zugeführten Mikrowellen erfaßt wird, dadurch gekennzeichnet, daß dem Resonator Mikrowellen von zwei Frequenzen zugeführt werden, die beide einer abfallenden Flanke der Resonanzkurve zugeordnet sind.

2. Verfahren nach Anspruch 1, dadurch gekennzeichnet, daß die Frequenzen der Mikrowellen durch ständiges Umschalten von niederen zu höheren und wieder zurück zu niederen Werten periodisch geändert werden.

3. Verfahren nach Anspruch 1 und/oder 2, dadurch gekennzeichnet, daß die Mikrowellen mit einer niederfrequenteren rechteckförmigen Wechselspannung frequenzmoduliert werden.

4. Verfahren nach Anspruch 3, dadurch gekennzeichnet, daß die bei maximalen und minimalen Werten der Modulationsschwingung von dem Resonator abgegebenen gleichgerichteten Signale erfaßt und aus den maximalen und minimalen Signalen Auswertsignale gebildet werden.

5. Verfahren nach Anspruch 4, dadurch gekennzeichnet, daß aus dem der Summe der maximalen und minimalen Signale entsprechenden Signal ein Mittelwertsignal und aus dem der Differenz der Signale entsprechenden Signal ein Differenzsignal gebildet wird und daß beide Signale jeweils einer Rechenstufe zugeführt werden, in der die Signale in Polynomen zusammen mit Konstanten zu Teilsignalen verrechnet werden, die durch Addition den Endwert ergeben.

6. Verfahren nach Anspruch 5, dadurch gekennzeichnet, daß die Ermittlung der Konstanten durch Parametrierung anhand von Referenzwerten des Stoffes erfolgt, der - je nach zu ermittelnder Größe (z. B. Dichte/Masse, Feuchte) - vermessen wird.

7. Verfahren nach einem oder mehreren der vorhergehenden Ansprüche, dadurch gekennzeichnet, daß die Dichte/Masse von Schnittabak, insbesondere in einem Zigarettenstrang, erfaßt wird.

8. Verfahren nach einem oder mehreren der vorhergehenden Ansprüche, dadurch gekennzeichnet, daß die Feuchte von Schnittabak, insbesondere in einem Zigarettenstrang, erfaßt wird.

9. Anordnung zum Erfassen mindestens einer Eigenschaft eines Stoffes, mit einem Resonator, dem von einem Generator Mikrowellen zuführbar sind, und von dem ein hochfrequentes von dem Stoff beeinflußtes Signal zum Erfassen seiner Resonanzfrequenz-Verschiebung und Dämpfung gegenüber dem von dem Stoff unbeeinflußten Signal abnehmbar und einer Auswertschaltung zuführbar ist, mit einer Zufuhr von Mikrowellen mit mindestens zwei unterschiedlichen Frequenzen von dem Generator zu dem Resonator und mit einer Resonanzfrequenz-Verschiebungen durch Vergleich der von dem Stoff beeinflußten Resonanzkurve gegenüber der von dem Stoff unbeeinflußten Resonanzkurve sowie die Dämpfung durch Vergleich der Apliduden der von dem Stoff beeinflußten und unbeeinflußten Resonanzkurven erfassenden Schaltungsanordnung, gekennzeichnet durch die Zufuhr von Mikrowellen von zwei Frequenzen, die beide einer abfallenden Flanke der Resonanzkurve zugeordnet sind, zu dem Resonator.

10. Anordnung nach Anspruch 9, gekennzeichnet durch eine Umschaltanordnung zum ständigen Umschalten der Frequenzen der Mikrowellen von niederen zu höheren und wieder zurück zu niederen Werten zwecks periodischer Frequenzänderrungen.

11. Anordnung nach Anspruch 9 und/oder 10, gekennzeichnet durch eine die Mikrowellen mit einer niederfrequenteren rechteckförmigen Wechselspannung modulierende Frequenzmodulationsanordnung.

12. Anordnung nach Anspruch 11, gekennzeichnet durch eine die bei maximalen und minimalen Werten der Modulationsfrequenz von dem Resonator abgegebenen Signale erfassende Abtastanordnung zur Bildung von Auswertsignalen.

13. Anordnung nach Anspruch 12, dadurch gekennzeichnet, daß die Abtastsignale einer Summierund einer Differenzbildungsschaltung zugeführt sind, deren Ausgangssignale jeweils eine Rechenstufe beaufschlagen, in der die Signale in Polynomen zusammen mit Konstanten zu Teilsignalen verrechnet werden, die einem Additionsglied zum Bilden des Endwerts zugeführt sind.

14. Anordnung nach Anspruch 13, gekennzeichnet durch Ermittlung der Konstanten mittels Parametrietung anhand von Referenzwerten des Stoffes, der - je nach zu ermittelnder Größe (z. B. Dichte/Masse, Feuchte) - vermessen wird.

15. Anordnung nach einem oder mehreren der Ansprüche 9 bis 14, dadurch gekennzeichnet, daß der Resonator in einem Gehäuse aus Metall angeordnet ist, das jeweils eine Einlaßöffnung sowie eine Auslaßöffnung zum Durchleiten eines Stranges der tabakverarbeitenden Industrie, insbesondere eines Zigarettenstranges, aufweist.

16. Anordnung nach Anspruch 15, dadurch gekennzeichnet, daß das Gehäuse rotationssymmetrisch, vorzugsweise zylindrisch, ausgebildet ist.

17. Anordnung nach einem oder mehreren der Ansprüche 9 bis 16, dadurch gekennzeichnet, daß in dem Gehäuse ein dielektrischer Festkörperresonator angeordnet ist.

18. Anordnung nach einem oder mehreren der Ansprüche 9 bis 17, gekennzeichnet durch eine Erfassung der Dichte/Masse von Schnittabak, insbesondere in einem Zigarettenstrang.

19. Anordnung nach einem oder mehreren der Ansprüche 9 bis 17, gekennzeichnet durch eine Erfassung der Feuchte von Schnittabak, insbesondere in einem Zigarettenstrang.

Fig.1

Fig. 3

Fig. 2b

Fig. 2c

Fig. 2a

EP 0 902 277 A1

**Europäisches Patentamt**

# EUROPÄISCHER RECHERCHENBERICHT

Nummer der Anmeldung

EP 98 11 4417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 962 384 A (WALKER CHARLES W E)<br>9. Oktober 1990<br>* Anspruch 1 * | 1,9 | G01N22/04<br>G01N22/00 |
| P,A | EP 0 843 959 A (CLAAS OHG) 27. Mai 1998<br>* Spalte 6, letzter Absatz – Spalte 8, Zeile 29 * | 1,9 | |
| P,X | EP 0 791 823 A (HAUNI WERKE KOERBER & CO KG) 27. August 1997<br>* Ansprüche * | 1,2,9,10 | |
| | | | **RECHERCHIERTE SACHGEBIETE (Int.Cl.6)**<br><br>G01N |

Der vorliegende Recherchenbericht wurde für alle Patentansprüche erstellt

| Recherchenort | Abschlußdatum der Recherche | Prüfer |
|---|---|---|
| DEN HAAG | 11. Dezember 1998 | HULNE, S |

## ANHANG ZUM EUROPÄISCHEN RECHERCHENBERICHT
## ÜBER DIE EUROPÄISCHE PATENTANMELDUNG NR.

EP 98 11 4417

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-1998

| Im Recherchenbericht angeführtes Patentdokument | | Datum der Veröffentlichung | Mitglied(er) der Patentfamilie | | Datum der Veröffentlichung |
|---|---|---|---|---|---|
| US 4962384 | A | 09-10-1990 | US | 4727311 A | 23-02-1988 |
| EP 0843959 | A | 27-05-1998 | DE | 19648126 A | 28-05-1998 |
|  |  |  | JP | 10155330 A | 16-06-1998 |
| EP 0791823 | A | 27-08-1997 | DE | 19705260 A | 21-08-1997 |
|  |  |  | JP | 9325123 A | 16-12-1997 |

EPO FORM P0461

Für nähere Einzelheiten zu diesem Anhang : siehe Amtsblatt des Europäischen Patentamts, Nr. 12/82